# EUROPEAN PATENT SPECIFICATION

(11) **EP 3 393 049 B1**
(45) Date of publication and mention of the grant of the patent: **19.08.2020**
(21) Application number: 16875469.5
(22) Date of filing: 06.12.2016
(51) Int. Cl.: H04B 1/3822, B60L 3/00, B60L 15/40, H02J 50/00, H04B 1/04, B61L 3/12, G06K 7/00, G08G 1/16, G06K 19/07, H04W 4/44, H04W 52/04, H04W 52/20, H04W 52/28, H04W 52/36, H04L 29/08

(54) **ON-VEHICLE COMMUNICATION DEVICE**
KOMMUNIKATIONSVORRICHTUNG AN BORD EINES FAHRZEUGS
DISPOSITIF DE COMMUNICATION SUR UN VÉHICULE

(30) Priority: 18.12.2015 JP 2015247710
(43) Date of publication of application: 24.10.2018
(73) Proprietor: Hitachi, Ltd., Tokyo 100-8280 (JP)
(72) Inventor: KURIHARA, Naoki, Tokyo 100-8280 (JP); IKEDA, Naohiro, Tokyo 100-8280 (JP); TAKAHASHI, Masayoshi, Tokyo 100-8280 (JP)
(74) Representative: Mewburn Ellis LLP
(86) International application number: PCT/JP2016/086249
(87) International publication number: WO 2017/104487

(56) References cited:
- EP-A1- 2 835 913
- DE-A1-102015 210 633
- JP-A- H08 183 455
- JP-A- 2008 094 174
- JP-A- 2014 175 884
- JP-A- 2015 138 380
- US-A1- 2010 277 359

## Description

### Technical Field

The present invention relates to an onboard communication system, and is preferably employed in an onboard communication system that is mounted in a movable body and configured to receive information from a terrestrial communication system, for example.

### Background Art

An onboard communication system is radio equipment that is mounted in a movable body and configured to supply a power wave to a terrestrial communication system when passing by the terrestrial communication system and receive an information wave output from the terrestrial communication system in response to this power wave. The onboard communication system needs to keep outputting a power wave at all times during traveling so that it can activate the terrestrial communication system and acquire information therefrom irrespective of the timing when the terrestrial communication system appears. Meanwhile, the onboard communication system has factors that cause deterioration of communication environment such as a change in the velocity of the movable body in which the onboard communication system is mounted, displacement in the level of a transmitting and receiving antenna due to the vertical movement of a bumper, and a difference in the attachment level of the transmitting and receiving antenna, and the terrestrial communication system has factors that cause deterioration of communication environment such as gravel and trash placed thereon and water exposure; however, even in such cases, the onboard communication system needs to establish communication with the terrestrial communication system.

Meanwhile, immediately after the onboard communication system mounted in the movable body currently traveling enters a communication permissible range in which communication with the terrestrial communication system is available (hereinafter referred to as a "contact zone"), power supplied to the terrestrial communication system is small because the onboard communication system is far from the terrestrial communication system. Then, power supplied to the terrestrial communication system becomes the largest when the onboard communication system comes the closest to the terrestrial communication system, and power supplied to the terrestrial communication system becomes smaller again as the onboard communication system goes away from the terrestrial communication system and comes closer to the outer edge of the contact zone. In this way, power supplied to the terrestrial communication system varies largely; however, even under such conditions, the onboard communication system needs to acquire an information wave from the terrestrial communication system reliably. The onboard communication system sets a power wave value, at which the terrestrial communication system can be activated under either of the above conditions, as its rated value, and transmits a power wave at the rated value at all times.

Patent Literature 1 discloses that a system has an onboard element and a terrestrial element, and the terrestrial element uniquely selects transmission information, set in a data storage unit, based on a transmission information control condition determined according to current indication information and a direction condition sent from a signal controller.

### Citation List

### Patent Literature

Patent Literature 1: Japanese Unexamined Patent Application Publication No. JP H08 183455 A.
JP 2015 138380 A proposes an obstacle detection system. DE 102015210633 A proposes an onboard communication device. EP 2835913 A proposes a wireless power transmission method. US 2010/0277359 A proposes a vehicle radar apparatus.

### Summary of Invention

### Technical Problem

As described above, the onboard communication system that transmits a power wave at the rated value at which the terrestrial communication system can be activated in any environment is effective in establishing reliable communication between the onboard communication system and the terrestrial communication system under various communication conditions. However, if the onboard communication system is kept close to the terrestrial communication system due to stop of the onboard communication system right above the terrestrial communication system, for example, the temperature of peripheral elements of a power-wave power receiving circuit located inside increases due to successive reception of a power wave having intensity much stronger than required power. In addition, if different movable bodies stop at a location near the same terrestrial communication system over and over, for example, a state where the movable body comes closer to the terrestrial communication system and a state where the movable body goes away from the terrestrial communication system are repeated alternately. This causes repetition of temperature increase and decrease of the peripheral elements of the power-wave power receiving circuit, and this cycle puts stress on and relieves stress from solder of the peripheral elements of the power-wave power receiving circuit over and over, which becomes one cause of crack. This might result in reduction of the longevity of the terrestrial communication system.

The present invention has been made in consideration of the above point, and aims to provide an onboard communication system that reduces deterioration of the durability of a terrestrial communication system. Solution to Problem

In order to solve the above problem, an onboard communication system according to the present invention that is mounted in a movable body includes: a transmitting and receiving antenna configured to transmit a power wave and receive an information wave; an information wave demodulation unit configured to demodulate an information wave received in the transmitting and receiving antenna; a power wave output unit configured to output a power wave to the transmitting and receiving antenna; and a computing unit configured to instruct, upon detecting stop of the movable body and judging that no error exists in information demodulated by the information wave demodulation unit, the power wave output unit to make the power wave output smaller than the power wave output observed when the stop is detected, and instruct, upon detecting travel of the movable body after the instruction to reduce the power wave output, the power wave output unit to increase the reduced power wave output.

### Advantageous Effects of Invention

According to the present invention, it is possible to reduce deterioration of the durability of a terrestrial communication system. Brief Description of Drawings

Fig. 1 is a block diagram schematically illustrating an onboard communication system according to this embodiment and a movable body mounting the onboard communication system therein.
Fig. 2 is a block diagram illustrating an internal configuration example of a power wave output unit.
Fig. 3 is a flowchart illustrating power wave output adjustment processing executed by a computing unit.
Fig. 4 is a timing chart illustrating an example of transmission power reduction processing executed by the computing unit.
Fig. 5 is a flowchart illustrating during-stop power wave output adjustment processing executed by the computing unit.

### Description of Embodiments

Hereinbelow, an embodiment of the present invention will be described in detail based on the drawings. Throughout the following description, similar elements are given the same reference signs and are not described again here.

### (1) Configuration of Onboard Communication System according to this Embodiment

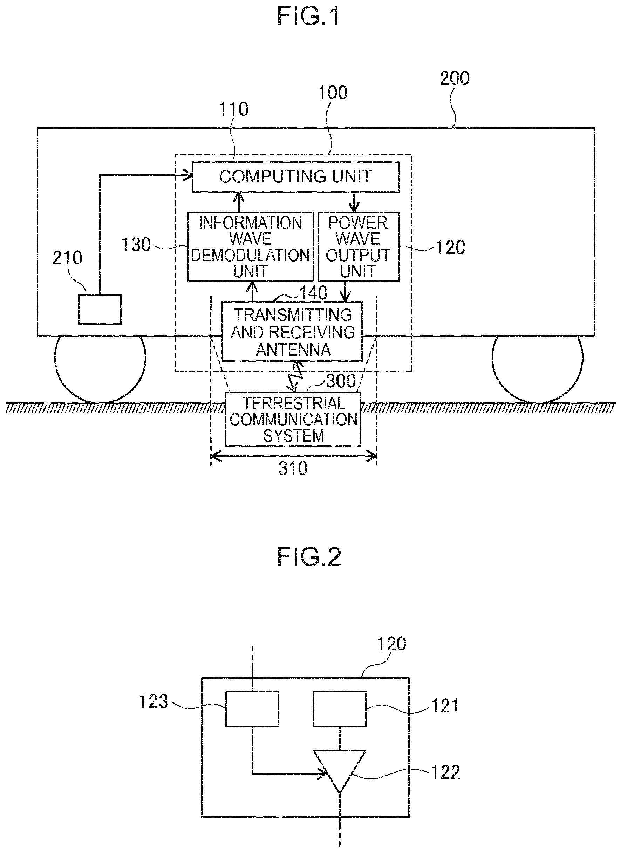

Fig. 1 is a block diagram schematically illustrating an onboard communication system 100 according to this embodiment and a movable body 200 mounting the onboard communication system 100 therein. As illustrated in this drawing, the onboard communication system 100 is mounted in the movable body 200, and includes: a transmitting and receiving antenna 140 configured to transmit a power wave and receive an information wave; an information wave demodulation unit 130 configured to demodulate an information wave received in the transmitting and receiving antenna 140; a power wave output unit 120 configured to output a power wave to the transmitting and receiving antenna 140; and a computing unit 110 configured to instruct, upon detecting stop of the movable body 200 and judging that no error exists in information demodulated by the information wave demodulation unit 130, the power wave output unit 120 to make the power wave output smaller than the power wave output observed when the stop is detected, and instruct, upon detecting travel of the movable body 200 after the instruction to reduce the power wave output, the power wave output unit 120 to increase the reduced power wave output. Here, the judgment on whether or not error exists is made by parity bit or CRC (Cyclic Redundancy Check), and means judgment on whether or not error occurs in communication.

A terrestrial communication system 300 is secured on the ground, activated upon receipt of a power wave from the onboard communication system 100, and configured to transmit an information wave. The onboard communication system 100 becomes able to communicate with the terrestrial communication system 300 when the movable body 200 travels and the transmitting and receiving antenna 140 gets into a contact zone 310 where communication is available. Accordingly, while the movable body 200 is traveling, the onboard communication system 100 keeps outputting a power wave of a predetermined output during traveling (rated value) and waits for an information wave to be sent from the terrestrial communication system 300 so that it can activate the terrestrial communication system 300 upon entering the contact zone 310 of the terrestrial communication system 300.

The movable body 200 has a speed meter 210 configured to notify the computing unit 110 of at least one of the stop state and the travel state of the movable body. Here, the speed meter 210 may inform the computing unit 110 of a speed so that the computing unit 110 can judge any of the stop state and the travel state based on the speed. Here, the information wave demodulation unit 130 may calculate the reception level of the received information wave and, if the calculated value is equal to or larger than a predetermined threshold, demodulate the received information wave by turning CD (career detect) on and thereby showing that this is a contact zone.

Fig. 2 is a block diagram illustrating an internal configuration example of the power wave output unit 120. As illustrated in this drawing, the power wave output unit 120 may be constituted of: a power wave generation unit 121 configured to generate a power wave; a power wave amplification unit 122 configured to amplify a power wave generated in the power wave generation unit 121; and an amplification rate adjustment unit 123 configured to adjust the amplification rate of the power wave amplification unit 122. In this case, the computing unit 110 may be configured so that it determines the amplification rate and transmits the amplification rate to the amplification rate adjustment unit 123. Note that, although the power wave output unit 120 has the configuration as illustrated in Fig. 2 in this embodiment, the power wave output unit may have a configuration other than this configuration. Even if this configuration is employed, the power wave output unit may be configured so that the output of a power wave is stopped by the power wave generation unit 121 or by way of a switch connected to the transmitting and receiving antenna 140, for example.

### (2) Power wave Output Adjustment Processing

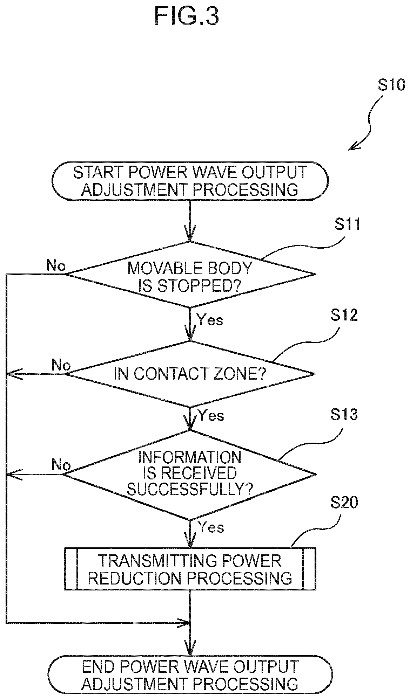

Fig. 3 is a flowchart illustrating power wave output adjustment processing S10 executed by the computing unit 110. As illustrated in this drawing, in the power wave output adjustment processing S10, it is first judged whether the movable body 200 is stopped based on a signal output from the speed meter 210 (S11) . Here, if it is judged that the movable body 200 is not stopped, i.e., the movable body is traveling, the power wave output adjustment processing S10 is terminated. On the other hand, if it is judged that the movable body 200 is stopped, it is judged whether the transmitting and receiving antenna 140 is in the contact zone of the terrestrial communication system 300 (S12). Whether the transmitting and receiving antenna is in the contact zone 310 is judged by the computing unit 110 on the basis of an information wave reception level signal generated in the information wave demodulation unit 130. Here, if it is judged that the transmitting and receiving antenna is not in the contact zone 310, the power wave output adjustment processing S10 is terminated. On the other hand, if it is judged that the transmitting and receiving antenna is in the contact zone 310, it is judged whether or not information on data rows demodulated by the information wave demodulation unit 130 is received in the computing unit 110 without error a predetermined number of times or more (S13) . Here, if it is judged negatively, the power wave output adjustment processing S10 is terminated. On the other hand, if it is judged positively, the process proceeds to transmission power reduction processing S20. Note that the predetermined number of times here is preferably more than one, but may be one.

In the transmission power reduction processing S20, the computing unit 110 may stop the output of a power wave from the transmitting and receiving antenna 140 in such a way that it instructs the amplification rate adjustment unit 123 to change the amplification rate to zero and changes the output of the power wave amplification unit 122 to zero. Alternatively, in the transmission power reduction processing S20, the computing unit 110 may instruct the amplification rate adjustment unit 123 to make output at an amplification rate larger than predefined zero and smaller than the rated value (the predetermined output during traveling). By doing so, it is possible to prevent the terrestrial communication system from any burden or reduce a burden on the terrestrial communication system, and thereby reduce deterioration of the durability of the terrestrial communication system.

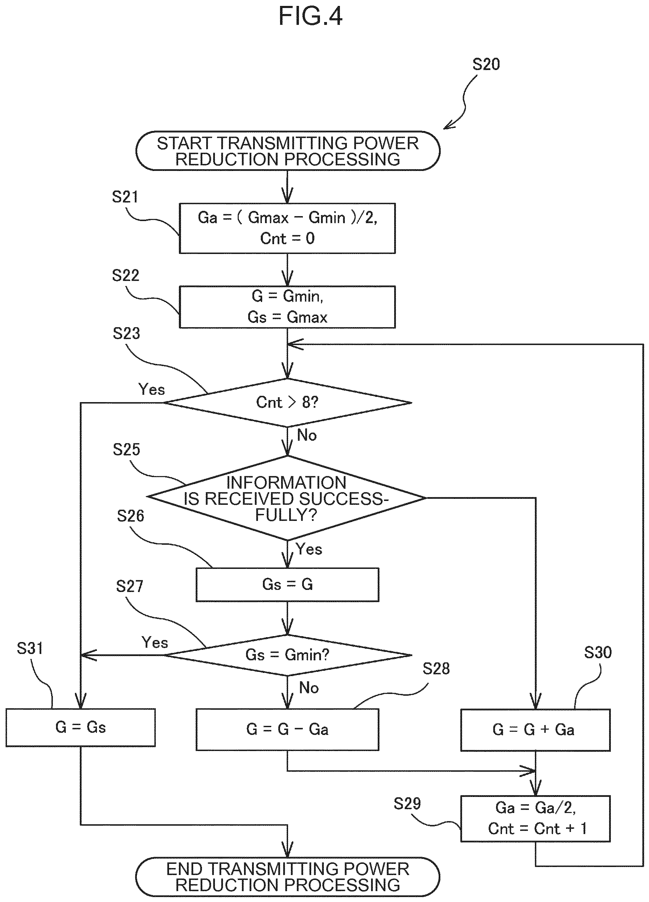

Fig. 4 is a flowchart illustrating another example of the transmission power reduction processing S20. The example of the transmission power reduction processing S20 in Fig. 4 illustrates the flowchart of processing for instructing to output a power wave at multiple intensity levels, searching the lowest level of the power wave output at which information is received without error while the movable body 200 is stopped, and instructing to output a power wave at the lowest level thus searched. In Fig. 4, the largest amplification rate Gmax indicates an amplification rate at which the output becomes the predetermined output during traveling (rated value), the smallest amplification rate Gmin indicates the smallest intensity value of the power wave output at which the transmitting and receiving antenna acquires information without error when the terrestrial communication system exchanging information with the transmitting and receiving antenna is located right under the transmitting and receiving antenna, and G indicates an amplification rate that the computing unit 110 instructs the amplification rate adjustment unit 123 to set. Further, a counter Cnt represents the number of loops processed, Ga represents the amount of change in amplification rate in the next loop processing, and Gs represents the amplification rate at which information has been successfully received last time in the transmission power reduction processing S20. Note that, although the smallest amplification rate Gmin is defined as described above in this embodiment, the smallest amplification rate is not limited to this and zero may be used for the smallest amplification rate, for example.

In the example of the transmission power reduction processing S20 illustrated in Fig. 4, a half of the difference between the largest amplification rate Gmax and the smallest amplification rate Gmin is set as the amount of change in amplification rate Ga in the next loop processing, and the counter is set at zero (S21). Next, the smallest amplification rate Gmin is set at the amplification rate G, and the largest amplification rate Gmax is set at the amplification rate Gs at which information has been successfully received last time (S22). Subsequently, it is judged whether the counter Cnt is larger than eight or not (S23). If it is judged positively, the amplification rate Gs at which information has been successfully received last time is set at the amplification rate G (S31), and the transmission power reduction processing S20 is terminated. On the other hand, if it is judged negatively in Step S23, it is judged whether or not information on data rows demodulated by the information wave demodulation unit 130 is received in the computing unit 110 without error a predetermined number of times or more (S25) as in Step S13 of the power wave output adjustment processing S10. If it is judged negatively here, the process proceeds to Step S30. If it is judged positively in Step S25, the current amplification rate is set at the amplification rate Gs at which information has been successfully received last time (S26). If the amplification rate Gs at which information has been successfully received last time is equal to the smallest amplification rate Gmin (S27), the current amplification rate is set at the amplification rate G the amplification rate Gs at which information has been successfully received last time (S31), and the transmission power reduction processing S20 is terminated. On the other hand, if the amplification rate Gs at which information has been successfully received last time is not equal to the smallest amplification rate Gmin (S27), a value obtained by subtracting the amount of change in amplification rate Ga from the current amplification rate G is set at the amplification rate G (S28).

In Step S30, the amplification rate G is set at a value obtained by adding the current amplification rate G and the amount of change in amplification rate Ga. After the Step S28 or the Step S30 is over, the amount of change in amplification rate Ga in the next loop processing is set at a half of the current amount of change Ga, the counter Cnt is incremented by one (S29), and the process returns to Step S23 to repeat processes at and after this step. Once the counter Cnt becomes over eight, the process is terminated, the amplification rate Gs at which information has been successfully received last time obtained at this time point is set at the amplification rate G (S31), and the transmission power reduction processing S20 is terminated. By executing the processing as described above, it is possible to output a power wave at the amplification rate at which reception data can be received successfully without error and at the smallest intensity among 256 levels (resolution of eight bits) into which the range between the largest amplification rate Gmax and the smallest amplification rate Gmin is divided. Accordingly, the movable body 200 no longer gives the terrestrial communication system 300 a power wave having intensity much larger than required power and thus it is possible to suppress increase in the temperature of peripheral elements of a power-wave power receiving circuit located inside, whereby deterioration of the durability of the terrestrial communication system 300 can be reduced. Further, since the computing unit 110 can instruct to output a power wave at the lowest level, it is possible to acquire information on information wave which is needed in real time, such as information on a change in a signal required to start traveling for example, while reducing power wave output. Here, although the process is terminated once the value of the counter Cnt, which is the number of successive comparison, reaches beyond eight, any value may be set instead by the bit width of an amplification rate instruction that the computing unit 110 sends to the amplification rate adjustment unit 123. Although eight bits are assumed in this example, 16 bits or 32 bits may be employed instead as a matter of course, and successive comparison at the least significant bit level is not necessarily required.

### (3) During-stop Power Wave Output Adjustment Processing

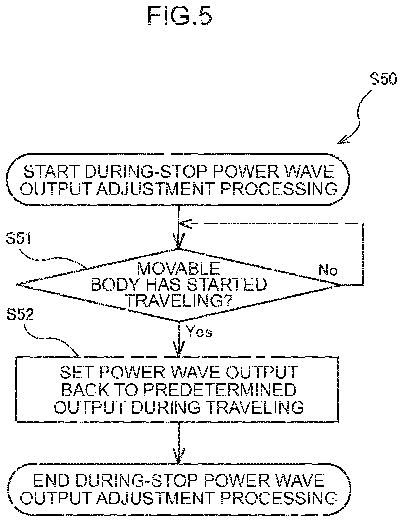

Fig. 5 is a flowchart illustrating during-stop power wave output adjustment processing S50 executed by the computing unit 110 after the transmission power reduction processing S20. As illustrated in this drawing, the computing unit 110 first judges whether the movable body has started traveling based on an output from the speed meter 210 (S51) . If it is judged that the movable body has not started traveling yet, i.e. the movable body is kept stopped, the judgment process at this Step S51 is repeated. On the other hand, if it is judged that the movable body has started traveling, the output of a power wave is set back to the rated value (the predetermined output during traveling) by setting the amplification rate at the largest amplification rate Gmax which is the predetermined output during traveling (rated value), for example (S52) .

### (4) Effects of This Embodiment

The onboard communication system 100 according to this embodiment includes: the transmitting and receiving antenna 140 configured to transmit a power wave and receive an information wave; the information wave demodulation unit 130 configured to demodulate an information wave received in the transmitting and receiving antenna 140; the power wave output unit 120 configured to output a power wave to the transmitting and receiving antenna 140; and the computing unit 110 configured to instruct, upon detecting stop of the movable body 200 and judging that no error exists in information demodulated by the information wave demodulation unit 130, the power wave output unit 120 to make the power wave output smaller than the power wave output observed when the stop is detected, and instruct, upon detecting travel of the movable body 200 after the instruction to reduce the power wave output, the power wave output unit 120 to increase the reduced power wave output. Thus, it is possible to reduce deterioration of the durability of the terrestrial communication system 300.

Further, the computing unit 110 may instruct to output a power wave at multiple intensity levels, search the lowest level of the power wave output at which information is received without error while the movable body 200 is stopped, and instruct to output a power wave at the lowest level thus searched. In this case, it is possible to acquire information on information wave while reducing power wave output, and thus acquire information which is needed in real time such as information on a change in a signal, for example.

Further, the computing unit 110 may judge, while the movable body 200 is stopped, whether error exists in information at the smallest value of the power wave output at which the transmitting and receiving antenna 140 acquires the information without error when the terrestrial communication system 300 exchanging information with the transmitting and receiving antenna 140 is located right under the transmitting and receiving antenna 140, and instruct to output the power wave at the smallest value if the information is received without error. In this case, it is possible to more effectively search the lowest level of the power wave output at which information is received without error.

Further, the reduction in the power wave output may be achieved by stopping the power wave output. In this case, no burden is imposed on the terrestrial communication system 300 if no information needs to be acquired especially when the movable body is stopped, whereby deterioration of the durability of the terrestrial communication system 300 can be further reduced.

Further, the computing unit 110 may judge that no error exists in demodulated information by judging whether no error exists in information acquired consecutively a predetermined number of times. Thereby, it is possible to reliably judge that the transmitting and receiving antenna 140 is kept located in the contact zone 310 where communication is available by acquiring the same information consecutively, for example.

Further, the computing unit 110 may instruct the power wave output unit 120 to output a power wave at predetermined output during traveling while the movable body 200 is traveling, reduce the power wave output, and then output a power wave at predetermined output during traveling when detecting travel of the movable body again. In this case, it is possible to acquire information during traveling again from the terrestrial communication system 300.

Further, the power wave output unit 120 may have: the power wave generation unit 121 configured to generate a power wave; the power wave amplification unit 122 configured to amplify a power wave generated in the power wave generation unit 121; and the amplification rate adjustment unit 123 configured to adjust the amplification rate of the power wave amplification unit 122, and the computing unit 110 may instruct to output a power wave by transmitting the amplification rate to the amplification rate adjustment unit 123. Thereby, it is possible to implement the above embodiment by a configuration using an amplifier.

### Industrial Applicability

The present invention is applicable to an onboard communication system that is mounted in a movable body and configured to receive information from a terrestrial communication system, for example. List of Reference Signs

- 100: ONBOARD COMMUNICATION SYSTEM
- 110: COMPUTING UNIT
- 120: POWER WAVE OUTPUT UNIT
- 121: POWER WAVE GENERATION UNIT
- 122: POWER WAVE AMPLIFICATION UNIT
- 123: AMPLIFICATION RATE ADJUSTMENT UNIT
- 130: INFORMATION WAVE DEMODULATION UNIT
- 140: TRANSMITTING AND RECEIVING ANTENNA
- 200: MOVABLE BODY
- 210: SPEED METER
- 300: TERRESTRIAL COMMUNICATION SYSTEM
- 310: CONTACT ZONE

## Claims

1. An onboard communication system (100) that is mounted in a movable body (200), comprising:
a transmitting and receiving antenna (140) configured to transmit a power wave and receive an information wave;
an information wave demodulation unit (130) configured to demodulate an information wave received in the transmitting and receiving antenna (140);
a power wave output unit (120) configured to output a power wave to the transmitting and receiving antenna (140); and
a computing unit (110) configured to instruct, upon detecting stop of the movable body (200) and judging that no error exists in information demodulated by the information wave demodulation unit (130), the power wave output unit (120) to make the power wave output smaller than the power wave output observed when the stop is detected, and instruct, upon detecting travel of the movable body after the instruction to reduce the power wave output, the power wave output unit to increase the reduced power wave output.

2. The onboard communication system (100) according to claim 1, wherein the computing unit (110) is configured to:
instruct to output the power wave at multiple intensity levels; and
search the lowest level of the power wave output at which the information is received without error while the movable body is stopped, and instruct to output the power wave at the lowest level thus searched.

3. The onboard communication system (100) according to claim 2,
wherein the computing unit (110) is configured to judge, while the movable body (200) is stopped, whether error exists in information at the smallest value of the power wave output at which the transmitting and receiving antenna (140) acquires the information without error when a terrestrial communication system (300) exchanging information with the transmitting and receiving antenna is located right under the transmitting and receiving antenna, and instruct to output the power wave at the smallest value if the information is received without error.

4. The onboard communication system (100) according to claim 1,
wherein the reduction in the power wave output is achieved by stopping the power wave output.

5. The onboard communication system (100) according to any one of claims 1 to 4,
wherein the computing unit (110) is configured to judge that no error exists in the demodulated information by judging whether no error exists in information acquired consecutively a predetermined number of times.

6. The onboard communication system (100) according to any one of claims 1 to 5,
wherein the computing unit (110) is configured to instruct the power wave output unit (120) to output the power wave at predetermined output during traveling while the movable body (200) is traveling, reduce the power wave output, and then output the power wave at the predetermined output during traveling upon detecting the travel again.

7. The onboard communication system (100) according to any one of claims 1 to 6,
wherein the power wave output unit (120) has:
a power wave generation unit (121) configured to generate the power wave;
a power wave amplification unit (122) configured to amplify the power wave generated in the power wave generation unit (120); and
an amplification rate adjustment unit (123) configured to adjust an amplification rate of the power wave amplification unit (122), and
the computing unit (110) is configured to instruct to output the power wave by transmitting the amplification rate to the amplification rate adjustment unit (123).

## Patentansprüche

1. Bord-Kommunikationssystem (100), das in einem bewegbaren Körper (200) angebracht ist, das Folgendes umfasst:
eine Sende- und Empfangsantenne (140), die ausgelegt ist, eine Leistungswelle zu senden und eine Informationswelle zu empfangen;
eine Informationswellen-Demodulationseinheit (130), die ausgelegt ist, eine durch die Sende- und Empfangsantenne (140) empfangene Informationswelle zu demodulieren;
eine Leistungswellen-Ausgabeeinheit (120), die ausgelegt ist, um eine Leistungswelle an die Sende- und Empfangsantenne (140) auszugeben; und
eine Rechnereinheit (110), die ausgelegt ist, bei einer Detektion des Anhaltens des bewegbaren Körpers (200) und bei einer Beurteilung, dass in den durch die Informationswellen-Demodulationseinheit (130) demodulierten Informationen kein Fehler vorliegt, der Leistungswellen-Ausgabeeinheit (120) zu befehlen, die Leistungswellenausgabe kleiner zu machen als die Leistungswellenausgabe, die beobachtet wurde, als das Anhalten detektiert wurde, und bei einer Detektion der Bewegung des bewegbaren Körpers nach dem Befehl zum Reduzieren der Leistungswellenausgabe der Leistungswellen-Ausgabeeinheit zu befehlen, die reduzierte Leistungswellenausgabe zu erhöhen.

2. Bord-Kommunikationssystem (100) nach Anspruch 1, wobei die Rechnereinheit (110) ausgelegt ist, um:
zu befehlen, dass die Leistungswelle mit mehreren Intensitätspegeln ausgegeben wird;
und
den niedrigsten Pegel der Leistungswellenausgabe zu suchen, bei dem die Informationen ohne Fehler empfangen werden, während der bewegbare Körper angehalten wird, und zu befehlen, dass die Leistungswelle mit dem so gesuchten niedrigsten Pegel ausgegeben wird.

3. Bord-Kommunikationssystem (100) nach Anspruch 2, wobei die Rechnereinheit (110) ausgelegt ist, zu beurteilen, während der bewegbare Körper (200) angehalten wird, ob in den Informationen an dem kleinsten Wert der Leistungswellenausgabe, an dem die Sende- und Empfangsantenne (140) die Informationen ohne Fehler erfasst, ein Fehler vorliegt, wenn ein terrestrisches Kommunikationssystem (300), das Informationen mit der Sende- und Empfangsantenne austauscht, direkt unter der Sende- und Empfangsantenne positioniert ist, und zu befehlen, dass die Leistungswelle mit dem kleinsten Wert ausgegeben wird, falls die Informationen ohne Fehler empfangen werden.

4. Bord-Kommunikationssystem (100) nach Anspruch 1,
wobei die Reduktion der Leistungswellenausgabe durch Anhalten der Leistungswellenausgabe erzielt wird.

5. Bord-Kommunikationssystem (100) nach einem der Ansprüche 1 bis 4,
wobei die Rechnereinheit (110) ausgelegt ist, um durch aufeinanderfolgendes Beurteilen eine vorbestimmte Anzahl von Malen, ob kein Fehler in den erfassten Informationen vorliegt, zu beurteilen, dass kein Fehler in den demodulierten Informationen vorliegt.

6. Bord-Kommunikationssystem (100) nach einem der Ansprüche 1 bis 5,
wobei die Rechnereinheit (110) ausgelegt ist, der Leistungswellenausgabe (120) zu befehlen, die Leistungswelle mit einer vorbestimmten Ausgabe auszugeben, während sich der bewegbare Körper (200) bewegt, die Leistungswellenausgabe zu reduzieren und dann bei erneuter Detektion der Bewegung die Leistungswelle an der vorbestimmten Ausgabe während der Bewegung auszugeben.

7. Bord-Kommunikationssystem (100) nach einem der Ansprüche 1 bis 6,
wobei die Leistungswellen-Ausgabeeinheit (120) Folgendes aufweist:
eine Leistungswellen-Erzeugungseinheit (121), die ausgelegt ist, die Leistungswelle zu erzeugen;
eine Leistungswellen-Verstärkungseinheit (122), die ausgelegt ist, um die in der Leistungswellenerzeugungseinheit (120) erzeugte Leistungswelle zu verstärken; und
eine Verstärkungsrateneinstelleinheit (123), die ausgelegt ist, eine Verstärkungsrate der Leistungswellen-Verstärkungseinheit (122) einzustellen und
wobei die Rechnereinheit (110) ausgelegt ist, zu befehlen, die Leistungswelle durch Senden der Verstärkungsrate an die Verstärkungsraten-Einstelleinheit (123) auszugeben.

## Revendications

1. Système de communication embarqué (100) qui est monté dans un corps mobile (200), comprenant :
une antenne d'émission et de réception (140) configurée de manière à émettre une onde de puissance et à recevoir une onde d'informations ;
une unité de démodulation d'onde d'informations (130) configurée de manière à démoduler une onde d'informations reçue dans l'antenne d'émission et de réception (140) ;
une unité de sortie d'onde de puissance (120) configurée de manière à fournir en sortie une onde de puissance à l'antenne d'émission et de réception (140) ; et
une unité de calcul (110) configurée de manière à donner instruction, lors de la détection d'un arrêt du corps mobile (200) et lorsqu'il est évalué qu'il n'existe aucune erreur dans des informations démodulées par l'unité de démodulation d'onde d'informations (130), à l'unité de sortie d'onde de puissance (120), de diminuer la sortie d'onde de puissance par rapport à la sortie d'onde de puissance observée lors de la détection de l'arrêt, et à donner instruction, lors de la détection d'un déplacement du corps mobile après l'instruction de diminution de la sortie d'onde de puissance, à l'unité de sortie d'onde de puissance, d'augmenter la sortie d'onde de puissance réduite.

2. Système de communication embarqué (100) selon la revendication 1,
dans lequel l'unité de calcul (110) est configurée de manière à :
donner instruction de fournir en sortie l'onde de puissance à de multiples niveaux d'intensité ; et
rechercher le niveau le plus faible de la sortie d'onde de puissance auquel les informations sont reçues sans erreur, tandis que le corps mobile est arrêté, et donner instruction de fournir en sortie l'onde de puissance au niveau le plus faible ainsi recherché.

3. Système de communication embarqué (100) selon la revendication 2,
dans lequel l'unité de calcul (110) est configurée de manière à évaluer, tandis que le corps mobile (200) est arrêté, si une erreur existe dans des informations, à la valeur la plus faible de la sortie d'onde de puissance à laquelle l'antenne d'émission et de réception (140) acquiert les informations sans erreur lorsqu'un système de communication terrestre (300) échangeant des informations avec l'antenne d'émission et de réception est situé juste en dessous de l'antenne d'émission et de réception, et à donner instruction de fournir en sortie l'onde de puissance à la valeur la plus faible si les informations sont reçues sans erreur.

4. Système de communication embarqué (100) selon la revendication 1,
dans lequel la réduction de la sortie d'onde de puissance est obtenue en arrêtant la sortie d'onde de puissance.

5. Système de communication embarqué (100) selon l'une quelconque des revendications 1 à 4,
dans lequel l'unité de calcul (110) est configurée de manière à évaluer qu'aucune erreur n'existe dans les informations démodulées en évaluant si aucune erreur n'existe dans les informations acquises consécutivement un nombre de fois prédéterminé.

6. Système de communication embarqué (100) selon l'une quelconque des revendications 1 à 5,
dans lequel l'unité de calcul (110) est configurée de manière à donner instruction, à l'unité de sortie d'onde de puissance (120), de fournir en sortie l'onde de puissance, au niveau d'une sortie prédéterminée au cours du déplacement, tandis que le corps mobile (200) se déplace, de réduire la sortie d'onde de puissance, et ensuite de fournir en sortie l'onde de puissance au niveau de la sortie prédéterminée au cours du déplacement, suite à une nouvelle détection du déplacement.

7. Système de communication embarqué (100) selon l'une quelconque des revendications 1 à 6,
dans lequel l'unité de sortie d'onde de puissance (120) présente :
une unité de génération d'onde de puissance (121) configurée de manière à générer l'onde de puissance ;
une unité d'amplification d'onde de puissance (122) configurée de manière à amplifier l'onde de puissance générée dans l'unité de génération d'onde de puissance (120) ; et
une unité d'ajustement de taux d'amplification (123) configurée de manière à ajuster un taux d'amplification de l'unité d'amplification d'onde de puissance (122) ; et
dans lequel l'unité de calcul (110) est configurée de manière à donner instruction de fournir en sortie l'onde de puissance, en transmettant le taux d'amplification à l'unité d'ajustement de taux d'amplification (123).
